# EUROPÄISCHE PATENTSCHRIFT

(11) **EP 0 854 061 B1**
(45) Veröffentlichungstag und Bekanntmachung des Hinweises auf die Patenterteilung: **17.10.2001**
(21) Anmeldenummer: 98100427.8
(22) Anmeldetag: 13.01.1998
(51) Int. Cl.: B60J 7/047

(54) **Fahrzeugdach mit zwei Dachöffnungen**
Vehicle roof with two roof openings
Toit de véhicule avec deux ouvertures de toit

(30) Priorität: 15.01.1997 DE 19701211
(43) Veröffentlichungstag der Anmeldung: 22.07.1998
(73) Patentinhaber: WEBASTO KAROSSERIESYSTEME GmbH, D-82131 Stockdorf (DE)
(72) Erfinder: Wingen, Bernhard, 83620 Feldkirchen (DE)
(74) Vertreter: Wiese, Gerhard

(56) Entgegenhaltungen:
- EP-A- 0 447 781
- GB-A- 444 152
- US-A- 5 029 937
- PATENT ABSTRACTS OF JAPAN vol. 7, no. 5 (M-184) [1150] , 11.Januar 1083 & JP 57 164812 A (TOYO KOGYO K.K.), 10.September 1982,

## Beschreibung

Die Erfindung betrifft ein Fahrzeugdach mit zwei in einer festen Dachhaut ausgebildeten, hintereinander angeordneten Dachöffnungen und jeweils einem verstellbaren Deckel zum Verschließen bzw. mindestens teilweisen Freigeben der Dachöffnungen sowie mit einem bezüglich der Fahrzeuglängsrichtung ortsfesten Mittelteil, welches die Öffnungen voneinander trennt, wobei die beiden Deckel mindestens in Fahrzeuglängsrichtung verschiebbar sind.

Eine solches gattungsgemäßes Fahrzeugdach ist aus der britischen Patentschrift GB-A-444,152 bekannt. Bei diesem gattungsgemäßen Fahrzeugdach wird das Mittelteil von einem ortsfesten Dachteil gebildet. Der vordere Deckel und der hintere Deckel sind aus ihrer Schließstellung jeweils in eine die jeweilige Dachöffnung freigebende Öffnungsstellung verschiebbar, wobei beide Deckel optional unter oder über dem ortsfesten Dachteil zu liegen kommen.

Nachteilig bei einer solchen Anordnung ist, daß die Dachöffnungen durch die ausschließlich verschiebbaren Deckel nicht zugfrei belüftbar sind.

Es ist Aufgabe der vorliegenden Erfindung, ein Fahrzeugdach zu schaffen, welches eine zugfreie Belüftung wenigstens einer Dachöffnung zuläßt.

Diese Aufgabe wird ausgehend von einem Fahrzeugdach der eingangs genannten Art durch die Merkmale des Patentanspruchs 1 gelöst. Vorteilhafte Ausgestaltungen der Erfindung sind den Unteransprüchen zu entnehmen.

Bei dieser erfindungsgemäßen Lösung ist vorteilhaft, daß durch die Schwenkbarkeit wenigstens eines Deckels der Fahrzeuginnenraum sowohl vorn als auch hinten gut entlüftet werden kann. Ein ausgestellter vorderer Deckel kann gleichzeitig eine Windabweiserfunktion für die aufgeschobene hintere Dachöffnung übernehmen.

In vorteilhafter Ausgestaltung der Erfindung ist vorgesehen, daß der vordere Deckel aus der Schließstellung nach hinten verschiebbar ist. Dadurch kann die vordere Dachöffnung nahe an der Dachvorderkante angeordnet werden.

Ferner ist bevorzugt vorgesehen, daß der hintere Deckel in etwa die gleichen Abmessungen wie der vordere Deckel aufweist. Dies ermöglicht die kostengünstige Verwendung von möglichst vielen für beide Deckel gleichartig ausgebildeten Teilen.

In bevorzugter Ausführung der Erfindung ist ferner vorgesehen, daß das Mittelteil in etwa die gleiche Längsabmessung wie der vordere Deckel aufweist. Dadurch kann der vordere Deckel vollständig unter das Mittelteil verschoben werden, so daß die vordere Dachöffnung vollständig freigelegt werden kann, ohne daß der vordere Deckel in die hintere Dachöffnung ragt.

Ferner wird bevorzugt, daß im Bereich des Mittelteils eine gemeinsame Führungsanordnung für die beiden Deckel vorgesehen ist und getrennte Antriebe für die beiden Deckel vorgesehen sind, deren Steuerung so gekoppelt ist, daß die beiden Deckel in eine Öffnungsstellung bringbar sind, in welcher die Deckel aneinander anliegend zum Teil unter das Mittelteil geschoben sind, wobei vorzugsweise der vordere Deckel mit seiner Hinterkante und der hintere Deckel mit seiner Vorderkante ausschwenkbar ist. Dies erlaubt eine spiegelbildliche Anordnung der Deckel und der dazugehörigen Mechanik, wodurch eine geringe Bauhöhe möglich wird und viele Deckel- bzw. Mechanikteile gleich ausgebildet sein können, was zu einer Kostenreduzierung beiträgt. Die weitgehend unabhängige Steuerung erhöht den Komfort für die Fahrzeuginsassen.

Ferner ist bevorzugt vorgesehen, daß das Mittelteil als separates, schwenkbares Teil aus Blech, Kunststoff, Glas oder Glas mit einer photovoltaischen Beschichtung ausgebildet ist. Dies erhöht in Verbindung mit mittels der photovoltaisch gewonnenen Energie betreibbaren Lüftern die Entlüftungswirkung bei ausgeschwenkten Deckeln.

Weitere bevorzugte Ausgestaltungen der Erfindung ergeben sich aus den Unteransprüchen.

Im folgenden sind drei Ausführungsformen der Erfindung anhand der beiliegenden Zeichnungen näher erläutert. Es zeigen:
FIG. 1 eine Explosionsdarstellung eines erfindungsgemäßen Fahrzeugdaches in einer ersten Ausführungsform,
FIG. 2A bis 2F schematische Seitenansichten eines erfindungsgemäßen Fahrzeugdaches von FIG. 1 in verschiedenen Stellungen;
FIG. eine Seitenansicht eines erfindungsgemäßen Fahrzeugdaches in einer zweiten Ausführungsform; und
FIG. 4A und 4B Seitenansichten eines erfindungsgemäßen Fahrzeugdaches in einer dritten Ausführungsform in verschiedenen Stellungen.

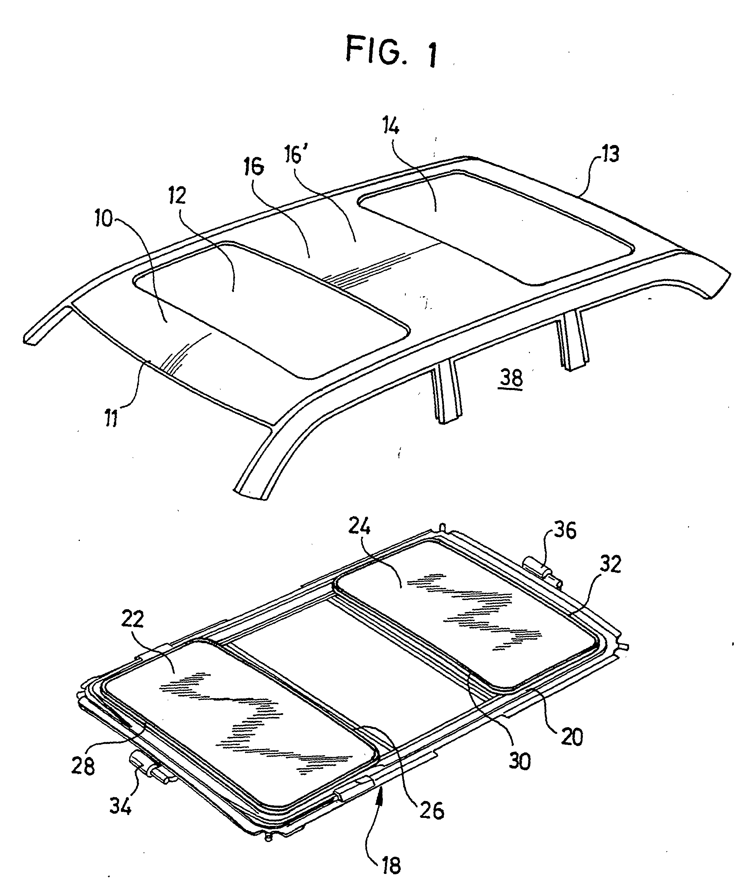

Gemäß FIG. 1 sind bei einem Fahrzeugdach zwei hintereinander angeordnete, gleich große Dachöffnungen 12 und 14 in einer festen Dachhaut 10 vorgesehen, wobei die Dachöffnungen 12 und 14 von einem Mittelteil 16, das als Teil der festen Dachhaut 10 ausgebildet ist, voneinander getrennt sind. Die vordere Dachöffnung 12 ist nahe der Vorderkante 11 der Dachhaut 10 angeordnet, während die hintere Dachöffnung 14 nahe der Hinterkante 13 der Dachhaut 10 angeordnet ist. An der Dachhaut 10 ist von unten ein Rahmen 18 befestigt. Der Rahmen 18 weist seitlich jeweils eine Führungsschiene 20 auf, in welcher ein vorderer Deckel 22 und ein hinterer Deckel 24 in Fahrzeuglängsrichtung verschiebbar gelagert sind. Beide Deckel 22, 24 sind ferner jeweils mit einer Ausschwenkmechanik (nicht dargestellt) versehen, die bei dem vorderen Deckel 22 ein Anheben bzw. Absenken der Deckelhinterkante 26 bezüglich der Deckelvorderkante 28 und bei dem hinteren Deckel ein Anheben bzw. Absenken der Deckelvorderkante 30 bezüglich der Deckelhinterkante 32 erlaubt. Zu ihrer Schwenk- bzw. Verschiebebewegung werden die Deckel 22, 24 jeweils von einem eigenen Antrieb 34 bzw. 36 angetrieben, der auf bekannte Weise als Elektromotor mit Ritzel und drucksteifen Antriebskabeln ausgebildet sein kann. In dem Abschnitt unter dem Mittelteil 16 ist für beide Deckel 22, 24 jeweils eine gemeinsame Führungsschiene 20 vorgesehen. Dies ermöglicht eine niedrige Bauhöhe des Fahrzeugdaches. Der Rahmen 18 ist im wesentlichen spiegelbildlich bezüglich seiner in Fahrzeugquerrichtung orientierten Mittelebene ausgebildet. Die Deckel 22, 24 nebst ihrer Mechanik sind im wesentlichen identisch ausgebildet und spiegelbildlich zueinander in den Rahmen 18 eingebaut. Diese spiegelbildliche Ausgestaltung ist kostensparend, da mehr Einzelteile gleichartig ausgebildet sein können als dies bei einem asymmetrischen Aufbau möglich wäre.

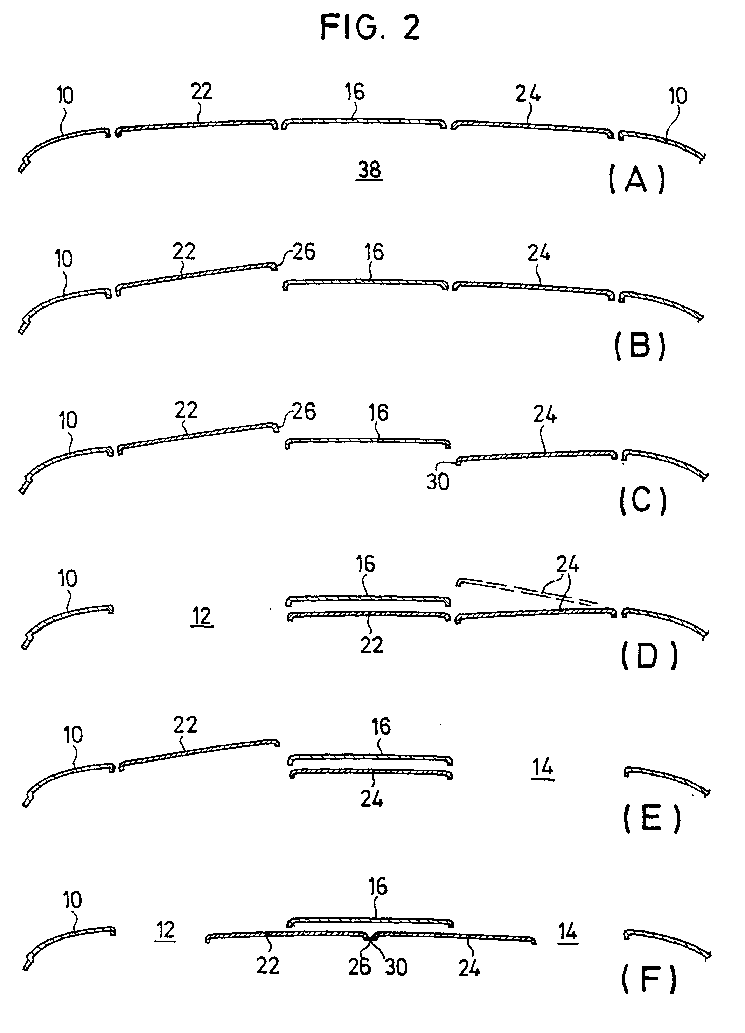

Der vordere Deckel 22 verschließt in der in FIG. 2A gezeigten Schließstellung die vordere Dachöffnung 12, während der hintere Deckel 24 die hintere Dachöffnung 14 verschließt. In FIG. 2B ist eine Stellung gezeigt, in welcher die Hinterkante 26 des vorderen Deckels 22 zu Entlüftungszwecken nach oben angehoben ist. In FIG. 2C ist zusätzlich die Vorderkante 30 des hinteren Deckels 24 zur Verstärkung der Entlüftung des Fahrzeuginnenraums 38 abgesenkt. In der in FIG. 2D gezeigten Stellung ist der vordere Deckel 22 aus seiner Schließstellung nach hinten vollständig unter das Mittelteil 16 geschoben, um die vordere Dachöffnung 12 vollständig freizugeben. Der hintere Deckel 24 kann in dieser Stellung verschwenkt, d.h. mit seiner Vorderkante 30 angehoben bzw. abgesenkt oder geschlossen, jedoch nicht verschoben werden. Bei der in FIG. 2E gezeigten Stellung ist der vordere Deckel 22 wieder in die in FIG. 2B und 2C gezeigte Stellung gebracht, während der hintere Deckel 24 aus seiner Schließstellung nach vorn vollständig unter das Mittelteil 16 verschoben ist, um die hintere Dachöffnung 14 vollständig freizugeben. In FIG. 2F ist eine Öffnungsstellung dargestellt, in welcher sowohl die vordere als auch die hintere Dachöffnung 12, 14 je zur Hälfte freigegeben sind. Die Deckel 22, 24 sind dabei beide jeweils zur Hälfte unter das Mittelteil 16 geschoben, wobei die Hinterkante 26 des ersteren an der Vorderkante 30 des zweiteren anliegt.

Die Steuerung der Antriebe 34, 36 ist so ausgebildet, daß die Schwenkbewegungen der Deckel 22, 24 völlig unabhängig voneinander ausgeführt werden können, während die Verschiebebewegungen so koordiniert sind, daß eine Kollision der Deckel 22, 24 nach vorn ausgeschlossen ist. So ist beispielsweise eine Verschiebung des hinteren Deckels 24 nach vorn ausgeschlossen, wenn sich der vordere Deckel 22 in der in FIG. 2D gezeigten Stellung unter dem Mittelteil 16 befindet. In FIG. 2E ist dagegen der vordere Deckel 22 bezüglich einer Verschiebung blockiert. Dieser Kollisionsschutz kann beispielsweise mittels (nicht dargestellter) Berührungssensoren an der Hinterkante 26 des vorderen Deckels 22 und der Vorderkante 30 des hinteren Deckels 24 und einer entsprechenden Steuerelektronik realisiert werden. Alternativ können auch Sensoren in den Führungsschienen 20 vorgesehen sein.

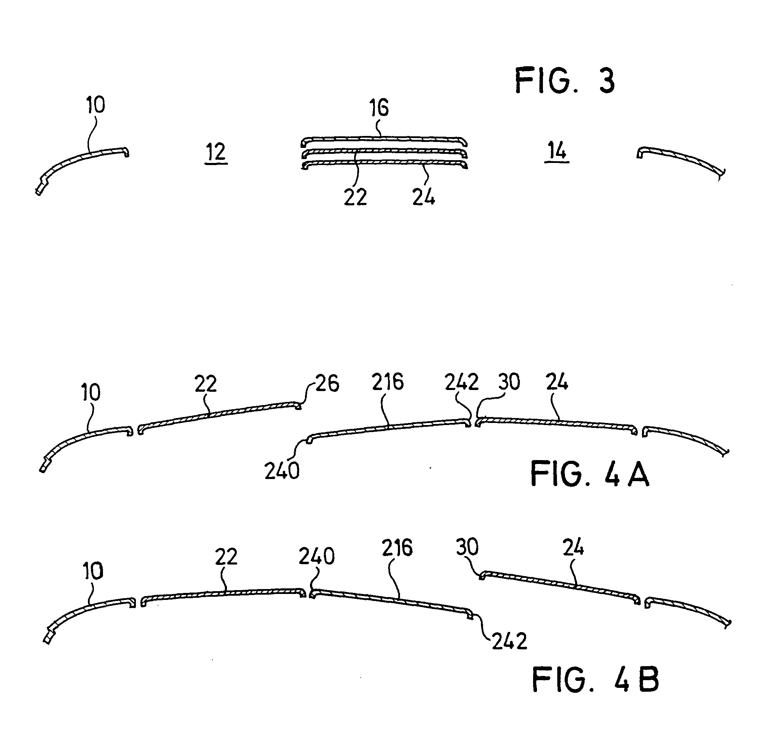

In FIG. 3 ist eine alternative Ausführungsform dargestellt. Der wesentliche Unterschied zu der in FIG. 2A bis 2F dargestellten Ausführungsform besteht darin, daß im Bereich unterhalb des Mittelteils 16 keine gemeinsame Führungsschiene für die beiden Deckel 22, 24 vorgesehen ist, sondern daß jeweils zwei übereinander angeordnete Führungsschienen (nicht gezeigt) für den vorderen Deckel 22 bzw. den hinteren Deckel 24 vorgesehen sind, wodurch die Deckel 22, 24, wie in FIG. 3 gezeigt, ganz oder zum Teil übereinander geschoben werden können, um beide Dachöffnungen 12 bzw. 14 gleichzeitig freizulegen, wobei beide Deckel 22, 24 unter dem Mittelteil 16 zu liegen kommen. Um die Bauhöhe des Fahrzeugdaches zu verringern, können die Führungsschienen auch so angeordnet sein, daß beim gleichzeitigen Freilegen beider Dachöffnungen 12, 14 beispielsweise der vordere Deckel 22 über dem Mittelteil 16 und der hintere Deckel 24 unter dem Mittelteil 16 zu liegen kommt. Diese Anordnung kann auch umgekehrt vorgesehen werden, so daß der hintere Deckel 24 über und der vordere Deckel 22 unter dem Mittelteil 16 zu liegen kommt. Dabei wird der jeweils über dem Mittelteil 16 liegende Deckel 22 bzw. 24 vorzugsweise von einer sich seitlich am Mittelteil 16 etwa parallel zu den Seitenrändern der Dachöffnungen 12 bzw. 14 erstreckenden Führung oder Relingführung geführt. Der Vorteil getrennter Führungsschienen besteht im wesentlichen darin, daß die beiden Deckel 22, 24 völlig unabhängig voneinander bewegt werden können.

Bei den Ausführungsformen gemäß FIG. 2A bis 2F und FIG. 3 kann das Mittelteil 16, anstatt als Teil der festen Dachhaut 10 ausgebildet zu sein, auch als separates, lichtdurchlässiges oder lichtundurchlässiges Teil aus Glas, Kunststoff oder Metall gefertigt sein, wie dies in FIG. 1 mit dem Bezugszeichen 16' bezeichnet ist. Es kann ferner auch aus Glas oder Kunststoff mit einer photovoltaischer Beschichtung versehen sein, um beispielsweise Strom für eine von der Fahrzeugbatterie unabhängige Standentlüftung des Fahrzeugs und/oder zum Laden der Fahrzeugbatterie zu erzeugen.

In FIG. 4A und 4B ist eine weitere Ausführungsform dargestellt, die sich von der in FIG. 2A bis 2F dargestellten im wesentlichen dadurch unterscheidet, daß das Mittelteil 216 bezüglich der Fahrzeuglängsrichtung zwar ortsfest ist, jedoch mittels einer (nicht dargestellten) Mechanik um eine Achse nahe seiner Vorderkante 240 bzw. nahe seiner Hinterkante 242 schwenkbar ist. Die Schwenkbewegung des Mittelteils 216 ist mit der Verstellbewegung des vorderen Deckels 22 und des hinteren Deckels 24 gekoppelt. Das Mittelteil 216 wird dabei vorzugsweise über den Antrieb des vorderen Deckels 22 bzw. den Antrieb des hinteren Deckels 24 mit angetrieben. In der in FIG. 4A dargestellten Stellung bewirkt ein Anheben der Hinterkante 26 des vorderen Deckels 22 ein Absenken der Vorderkante 240 des Mittelteils 216, um die Entlüftungswirkung zu verstärken. In analoger Weise bewirkt in der in FIG. 4B gezeigten Stellung das Anheben der Vorderkante 30 des hinteren Deckels 24 ein Absenken der Hinterkante 242 des Mittelteils 16, um den Lüftungsspalt zu erweitern. Die Stellungen der Deckel 22, 24 und des Mittelteils 216 sind ferner über eine entsprechende Ausbildung der Antriebe bzw. der Antriebssteuerung so miteinander gekoppelt, daß bei Absenkung der Vorderkante 240 bzw. der Hinterkante 242 des Mittelteils 216 keine Verschiebung der Deckel 22, 24 möglich ist bzw. daß keine Absenkung des Mittelteils 216 möglich ist, wenn sich einer oder beide Deckel 22, 24 in einer Verschiebestellung befindet bzw. befinden.

Es kann auch ein eigener Antrieb für das Mittelteil 216 vorgesehen sein, um beispielsweise ein Absenken des Mittelteils 216 auch bei geschlossenen Deckeln 22, 24 zu ermöglichen.

Das Mittelteil 216 kann als lichtdurchlässiges oder lichtundurchlässiges Teil aus Glas, Kunststoff oder Metall ausgebildet sein. Es kann ferner auch aus Glas oder Kunststoff mit einer photovoltaischen Beschichtung gefertigt sein.

### Bezugszeichenliste

| | |
|---|---|
| feste Dachhaut | **10** |
| Vorderkante von 10 | **11** |
| vordere Dachöffnung | **12** |
| Hinterkante von 10 | **13** |
| hintere Dachöffnung | **14** |
| Mittelteil | **16, 16', 216** |
| Rahmen | **18** |
| Führungsschienen | **20** |
| vorderer Deckel | **22** |
| hinterer Deckel | **24** |
| Hinterkante von 22 | **26** |
| Vorderkante von 22 | **28** |
| Vorderkante von 24 | **30** |
| Hinterkante von 24 | **32** |
| Antrieb für 22 | **34** |
| Antrieb für 24 | **36** |
| Fahrzeuginnenraum | **38** |

## Patentansprüche

1. Fahrzeugdach mit zwei in einer festen Dachhaut (10) ausgebildeten, hintereinander angeordneten Dachöffnungen (12, 14) und jeweils einem verstellbaren Deckel (22, 24) zum Verschließen bzw. mindestens teilweisen Freigeben der Dachöffnungen sowie mit einem bezüglich der Fahrzeuglängsrichtung ortsfesten Mittelteil (16, 16', 216), welches die Öffnungen voneinander trennt, wobei die beiden Deckel mindestens in Fahrzeuglängsrichtung verschiebbar sind, und der hintere Deckel (24) aus der Schließstellung nach vorn verschiebbar ist, **dadurch gekennzeichnet, daß** der vordere und/oder der hintere Deckel schwenkbar ausgebildet ist (sind), um eine Entlüftung ohne Freilegen der Dachöffnung(en) bewirken zu können.

2. Fahrzeugdach nach Anspruch 1, **dadurch gekennzeichnet, daß** der vordere Deckel (22) aus der Schließstellung nach hinten verschiebbar ist.

3. Fahrzeugdach nach Anspruch 2, **dadurch gekennzeichnet, daß** der hintere Deckel (24) in etwa die gleichen Abmessungen wie der vordere Deckel (22) aufweist.

4. Fahrzeugdach nach Anspruch 3, **dadurch gekennzeichnet, daß** das Mittelteil (16, 16', 216) in etwa die gleiche Längsabmessung wie der vordere Deckel (22) aufweist.

5. Fahrzeugdach nacheinem der vorhergehenden Ansprüche, **dadurch gekennzeichnet, daß** der vordere Deckel (22) mit seiner Hinterkante (26) und der hintere Deckel (24) mit seiner Vorderkante (30) ausschwenkbar ist.

6. Fahrzeugdach nach einem der vorhergehenden Ansprüche, **dadurch gekennzeichnet, daß** die beiden Deckel (22, 24) unabhängig voneinander mittels getrennter Antriebe (34, 36) betätigbar sind und in eine Öffnungsstellung bringbar sind, in welcher sie übereinander liegend mindestens zum Teil unter das Mittelteil (16, 16', 216) geschoben sind.

7. Fahrzeugdach nach einem der Ansprüche 1 bis 5, **dadurch gekennzeichnet, daß** im Bereich des Mittelteils (16, 16', 216) eine gemeinsame Führungsanordnung (20) für die beiden Deckel (22, 24) vorgesehen ist und daß getrennte Antriebe (34, 36) für die beiden Deckel vorgesehen sind, deren Steuerung so gekoppelt ist, daß die beiden Deckel (22, 24) in eine Öffnungsstellung bringbar sind, in welcher die Deckel (22, 24) aneinander anliegend zum Teil unter das Mittelteil (16. 16', 216) geschoben sind.

8. Fahrzeugdach nach einem der vorhergehenden Ansprüche, **dadurch gekennzeichnet, daß** das Mittelteil (16) ein Teil der festen Dachhaut (10) ist.

9. Fahrzeugdach nach einem der Ansprüche 1 bis 7, **dadurch gekennzeichnet, daß** das Mittelteil (16') als separates, feststehendes Teil aus Blech, Glas oder Glas mit einer photovoltaischen Beschichtung ausgebildet ist.

10. Fahrzeugdach nach einem der Ansprüche 1 bis 7, **dadurch gekennzeichnet, daß** das Mittelteil (216) als separates, schwenkbares Teil aus Blech, Glas oder Glas mit einer photovoltaischen Beschichtung ausgebildet ist.

11. Fahrzeugdach nach Anspruch 10, **dadurch gekennzeichnet, daß** das Mittelteil (216) in Abhängigkeit von der Verstellung der Deckel (22, 24) mit seiner Vorderkante (240) absenkbar ist, wenn die Hinterkante (26) des vorderen Deckels (22) angehoben ist, und mit seiner Hinterkante (242) absenkbar ist, wenn die Vorderkante (30) des hinteren Deckels (24) angehoben ist.

12. Fahrzeugdach nach einem der vorhergehenden Ansprüche, **dadurch gekennzeichnet, daß** die beiden Deckel (22, 24) in einen gemeinsamen Rahmen (18) eingebaut sind.

## Claims

1. A vehicle roof with two roof apertures (12, 14) disposed one behind the other and constructed in a fixed roof skin (10) and with in each case a displaceable cover (22, 24) for closing or at least partially opening the roof apertures, and with, stationary in relation to the longitudinal axis of the vehicle, a central part (16, 16', 216) which separates the apertures from each other, the two covers being displaceable at least in the longitudinal direction of the vehicle, and the rear cover (24) being displaceable forwards out of the closed position, **characterised in that** the front and/or the rear cover is(are) constructed to be pivotable in order to be able to provide ventilation without exposing the roof aperture(s).

2. A vehicle roof according to claim 1, **characterised in that** the front cover (22) is displaceable rearwardly out of the closed position.

3. A vehicle roof according to claim 2, **characterised in that** the rear cover (24) is of substantially the same dimensions as the front cover (22).

4. A vehicle roof according to claim 2, **characterised in that** the central part (16, 16', 216) has substantially the same longitudinal dimension as the front cover (22).

5. A vehicle roof according to one of the preceding claims, **characterised in that** the rear edge (26) of the front cover (22) and the front edge (30) of the rear cover (24) are adapted to pivot outwards.

6. A vehicle roof according to one of the preceding claims, **characterised in that** the two covers (22, 24) can be actuated independently of each other by means of separate drives (34, 36) and can be moved into an open position in which, lying above one another, they can be pushed at least partially under the central part (16, 16', 216).

7. A vehicle roof according to one of claims 1 to 5, **characterised in that** in the region of the central part (16, 16', 216) there is a common guide arrangement (20) for the two covers (22, 24) and **in that** separate drives (34, 36) are provided for the two covers, their control being so coupled that both covers (22, 24) can be moved into an open position in which the covers (22, 24), bearing on each other, are pushed partially under the central part (16, 16', 216).

8. A vehicle roof according to one of the preceding claims, **characterised in that** the central part (16) is a part of the fixed roof skin (10).

9. A vehicle roof according to one of claims 1 to 7, **characterised in that** the central part (16') is constructed as a separate fixed part from sheet metal, glass or glass with a photovoltaic coating.

10. A vehicle roof according to one of claims 1 to 7, **characterised in that** the central part (216) is constructed as a separate pivotable part from sheet metal, glass or glass with a photovoltaic coating.

11. A vehicle roof according to claim 10, **characterised in that**, as a function of the displacement of the covers (22, 24), the front edge (240) of the central part (216) can be lowered if the rear edge (26) of the front cover (22) is raised while its rear edge (242) can be lowered when the front edge (30) of the rear cover (24) is raised.

12. A vehicle roof according to one of the preceding claims, **characterised in that** the two covers (22, 24) are built into a common frame (18).

## Revendications

1. Toit de véhicule comprenant deux ouvertures de toit (12, 14) placées l'une derrière l'autre et réalisées dans une surface de toit fixe (10), deux obturateurs mobiles (22, 24) pour fermer ou au moins partiellement dégager les ouvertures de toit, ainsi qu'une partie centrale (16, 16', 216) fixe dans la direction longitudinale du véhicule qui sépare les ouvertures l'une de l'autre, sachant que les deux obturateurs sont mobiles au moins dans la direction longitudinale du véhicule et que l'obturateur arrière (24) peut coulisser vers l'avant à partir de sa position fermée, **caractérisé en ce que** l'obturateur avant et/ou arrière est (sont) réalisé(s) de manière basculante afin de permettre d'aérer sans dégager l'ouverture ou les ouvertures.

2. Toit de véhicule selon la revendication 1, **caractérisé en ce que** l'obturateur avant (22) peut coulisser vers l'arrière à partir de la position fermée.

3. Toit de véhicule selon la revendication 2, **caractérisé en ce que** l'obturateur arrière (24) présente approximativement les mêmes dimensions que l'obturateur avant (22).

4. Toit de véhicule selon la revendication 3, **caractérisé en ce que** la partie centrale (16, 16', 216) présente approximativement la même dimension en longueur que l'obturateur avant (22).

5. Toit de véhicule selon l'une des revendications précédentes, **caractérisé en ce que** l'obturateur avant (22) peut basculer avec son arête arrière (26) et l'obturateur arrière (24) avec son arête avant (30).

6. Toit de véhicule selon l'une des revendications précédentes, **caractérisé en ce que** les deux obturateurs (22, 24) peuvent être actionnés indépendamment l'un de l'autre au moyen de moteurs séparés (34, 36) et être mis dans une position d'ouverture dans laquelle ils ont glissé au moins en partie sous la partie centrale (16, 16', 216) en étant superposés.

7. Toit de véhicule selon l'une des revendications 1 à 5, **caractérisé en ce que** dans la zone de la partie centrale (16, 16', 216) est prévu un dispositif de guidage commun (20) pour les deux obturateurs (22, 24), et **en ce que** des moteurs séparés (34, 36) sont prévus pour les deux obturateurs dont la commande est couplée de telle manière que les deux obturateurs (22, 24) peuvent être mis dans une position ouverte dans laquelle les obturateurs (22, 24) ont glissé au moins en partie sous la partie centrale (16, 16', 216) en étant superposés.

8. Toit de véhicule selon l'une des revendications précédentes, **caractérisé en ce que** la partie centrale (16) est une partie de la surface de toit fixe (10).

9. Toit de véhicule selon l'une des revendications 1 à 7, **caractérisé en ce que** la partie centrale (16') est réalisée en tant que pièce fixe séparée en tôle, en verre ou en verre avec un revêtement photovoltaïque.

10. Toit de véhicule selon l'une des revendications 1 à 7, **caractérisé en ce que** la partie centrale (216) est réalisée en tant que pièce basculante séparée en tôle, en verre ou en verre avec un revêtement photovoltaïque.

11. Toit de véhicule selon la revendication 10, **caractérisé en ce que** l'arête avant (240) de la partie centrale (216) peut être abaissée en fonction du déplacement des obturateurs (22, 24) lorsque l'arête arrière (26) de l'obturateur avant (22) est soulevée, et son arête arrière (242) peut être abaissée lorsque l'arête avant (30) de l'obturateur arrière (24) est soulevée.

12. Toit de véhicule selon l'une des revendications précédentes, **caractérisé en ce que** les deux obturateurs (22, 24) sont montés dans un cadre commun (18).
